# EUROPEAN PATENT APPLICATION

(11) **EP 2 393 046 A1**
(43) Date of publication of application: **07.12.2011**
(21) Application number: 10164714.7
(22) Date of filing: 02.06.2010
(51) Int. Cl.: G06Q 10/00

(54) **Method for assisted message generation**

(71) Applicant: Research In Motion Limited, Waterloo, ON N2L 3W8 (CA)
(72) Inventor: Orr, Kevin Howard, Waterloo Ontario N2L 3W8 (CA); Fyke, Steven Henry, Waterloo Ontario N2L 3W8 (CA); Dods, Jeffrey Alton Hugh, Waterloo Ontario N2L 3W8 (CA)
(74) Representative: Patel, Binesh

(57) **Abstract**

A method for assisted message generation on an electronic device is provided. The method comprises: receiving from an input device a request to compose an electronic message; identifying a message recipient associated with the electronic message; determining from a datastore a suggested message component for the electronic message in dependence on the identified message recipient; and displaying the suggested message components on a display screen of the electronic device.

## Description

### TECHNICAL FIELD

The present disclosure relates to electronic messages and, more particularly, to methods for suggesting message components for an electronic message composed on an electronic device.

### BACKGROUND

Electronic messages such as email messages typically contain a number of message component fields which are populated with message components, such as graphics or text. For example, electronic messages often include a subject field, which may be populated with a descriptor of the message, and a message body field, which may be populated with the contents of the message. The message body may include, for example, an address line (i.e. Dear Sam), a main body (which typically contains the content of the message), and a signature line (i.e. Yours Truly, Frank).

Manual input of the message components, such as the message body or message subject may be time consuming. This is particularly true on mobile devices, where input devices may be designed so that typing is done with only one or two fingers on a user's hand. Furthermore, typing message components may distract a multi-tasking user from other tasks that the user may be performing simultaneously while inputting message components of the electronic message.

In view of these and other deficiencies in message component entry, there remains a need for improved methods for inputting electronic messages.

### BRIEF DESCRIPTION OF THE DRAWINGS

Figure 1 is a block diagram illustrating a communication system in which example embodiments of the present disclosure can be applied;

Figure 2 is a block diagram illustrating a mobile communication device in accordance with one example embodiment of the present disclosure;

Figure 3 is a block diagram illustrating an example message component datastore in accordance with one example embodiment of the present disclosure;

Figure 4 is a flowchart illustrating an example method for suggesting message components for an electronic message composed on an electronic device in accordance with one embodiment of the present disclosure;

Figures 5 and 6 are example electronic message composition user interface screens of a messaging application with which example embodiments of the present disclosure can be applied;

Figure 7 is a block diagram illustrating an example contact type datastore in accordance with one example embodiment of the present disclosure;

Figure 8 is a block diagram illustrating an example message component datastore in accordance with one example embodiment of the present disclosure;

Figure 9 is a flowchart illustrating an example method for suggesting message components for an electronic message composed on an electronic device in accordance with one embodiment of the present disclosure;

Figure 10 is a block diagram illustrating an example message component datastore in accordance with one example embodiment of the present disclosure;

Figure 11 is a flowchart illustrating an example method for suggesting message components for an electronic message composed on an electronic device in accordance with one embodiment of the present disclosure;

Figure 12 is a block diagram illustrating an example message component datastore in accordance with one example embodiment of the present disclosure;

Figure 13 is a flowchart illustrating an example method for suggesting message components for an electronic message composed on an electronic device in accordance with one embodiment of the present disclosure;

Figure 14 is a block diagram illustrating an example message component datastore in accordance with one example embodiment of the present disclosure;

Figure 15 is a flowchart illustrating an example method for suggesting message components for an electronic message composed on an electronic device in accordance with one embodiment of the present disclosure; and

Figure 16 is a flowchart illustrating an example method for suggesting message components for an electronic message composed on an electronic device in accordance with one embodiment of the present disclosure.

Similar reference numerals may have been used in different figures to denote similar components.

### DETAILED DESCRIPTION OF EXAMPLE EMBODIMENTS

In accordance with one embodiment of the present disclosure, there is provided a method for assisted message generation on an electronic device, comprising: receiving from an input device a request to compose an electronic message; identifying a message recipient associated with the electronic message; determining from a datastore a suggested message component for the electronic message in dependence on the identified message recipient; and displaying the suggested message components on a display screen of the electronic device.

In accordance with another embodiment of the present disclosure, there is provided a method for assisted message generation on an electronic device, comprising: receiving an electronic message; parsing the electronic message to determine whether one or more predetermined calendar keys are present in the received electronic message; and when one or more predetermined calendar keys are present in the received electronic message: obtaining availability information from a calendar application associated with the electronic device; determining a suggested message component in dependence on the identified message recipient and the availability information; and displaying the suggested message components on a display screen of the electronic device.

In accordance with a further embodiment of the present disclosure, there is provided a method for assisted message generation on an electronic device, comprising: receiving an electronic message; parsing the electronic message to determine whether one or more predetermined location keys are present in the received electronic message; and when one or more predetermined location keys are present in the electronic message: obtaining location information associated with the electronic message from a location detection subsystem of the electronic message; determining the suggested message component in dependence on the identified message recipient and the location information; and displaying the suggested message components on a display screen of the electronic device.

In accordance with a further embodiment of the present disclosure, there is provided a method for assisted message generation on an electronic device, comprising: receiving an electronic message; parsing the received electronic message to determine whether one or more predetermined source keys are present in the received electronic message, the predetermined sources keys being associated with the content of message components in the datastore; determining the suggested message component in dependence on the identified message recipient and any predetermined source keys present in the received electronic message; and displaying the suggested message components on a display screen of the electronic device.

In accordance with a further embodiment of the present disclosure, there is provided an electronic device, comprising: a processor: a display connected to the processor; a communication subsystem connected to the controller configured for communication over a wireless network; a memory connected to the processor and having one or more datastores stored thereon; and an input device connected to the processor; wherein the processor is configured for performing the steps of the above-described methods.

The example embodiments of the present disclosure are not limited to any particular operating system, mobile device architecture, server architecture, or computer programming language.

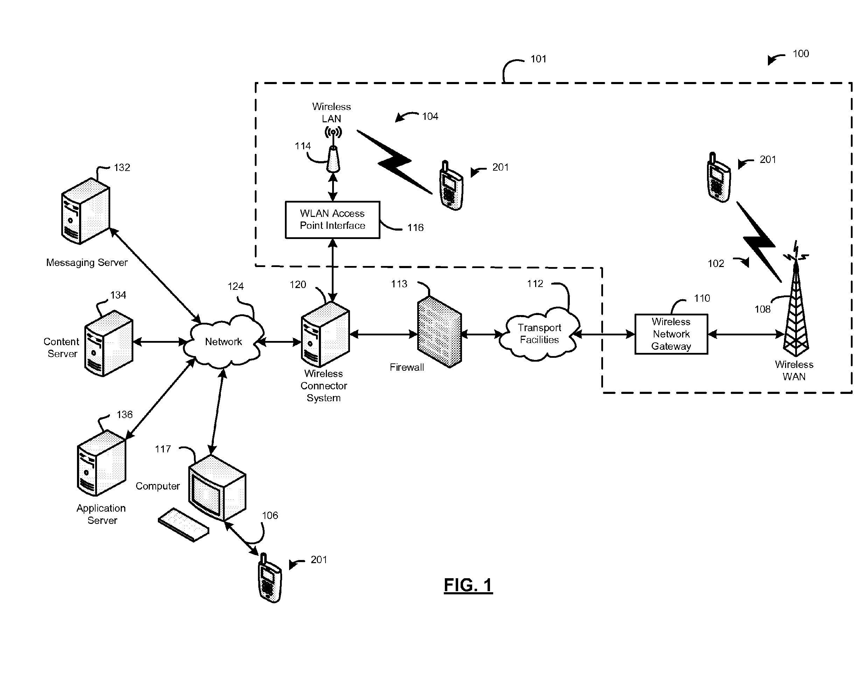

In order to facilitate an understanding of one possible environment in which example embodiments described herein can operate, reference is first made to Figure 1 which shows in block diagram form a communication system 100 in which example embodiments of the present disclosure can be applied. The communication system 100 comprises a number of mobile communication devices 201 which may be connected to the remainder of the system 100 in any of several different ways. Accordingly, several instances of mobile communication devices 201 are depicted in Figure 1 employing different example ways of connecting to the communication system 100. Mobile communication devices 201 are connected to a wireless network 101 which may comprise one or more of a Wireless Wide Area Network (WWAN) 102 and a Wireless Local Area Network (WLAN) 104 or other suitable network arrangements. In some embodiments, the mobile communication devices 201 are configured to communicate over both the WWAN 102 and WLAN 104, and to roam between these networks. In some embodiments, the wireless network 101 may comprise multiple WWANs 102 and WLANs 104.

The WWAN 102 may be implemented as any suitable wireless access network technology. By way of example, but not limitation, the WWAN 102 may be implemented as a wireless network that includes a number of transceiver base stations 108 (one of which is shown in Figure 1) where each of the base stations 108 provides wireless Radio Frequency (RF) coverage to a corresponding area or cell. The WWAN 102 is typically operated by a mobile network service provider that provides subscription packages to users of the mobile communication devices 201.

The WWAN 102 may further comprise a wireless network gateway 110 which connects the mobile communication devices 201 to transport facilities 112, and through the transport facilities 112 to a wireless connector system 120. Transport facilities 112 may include one or more private networks or lines, the public Internet, a virtual private network, or any other suitable network. The wireless connector system 120 may be operated, for example, by an organization or enterprise such as a corporation, university, or governmental department, which allows access to a network 124 such as an internal or enterprise network and its resources, or the wireless connector system 120 may be operated by a mobile network provider. In some embodiments, the network 124 may be realized using the Internet rather than an internal or enterprise network.

The wireless network gateway 110 provides an interface between the wireless connector system 120 and the WWAN 102, which facilitates communication between the mobile communication devices 201 and other devices (not shown) connected, directly or indirectly, to the WWAN 102. Accordingly, communications sent via the mobile communication devices 201 are transported via the WWAN 102 and the wireless network gateway 110 through transport facilities 112 to the wireless connector system 120. Communications sent from the wireless connector system 120 are received by the wireless network gateway 110 and transported via the WWAN 102 to the mobile communication devices 201.

The WLAN 104 comprises a wireless network which, in some embodiments, conforms to IEEE 802. 11x standards (sometimes referred to as Wi-Fi) such as, for example, the IEEE 802.11a, 802.11b and/or 802.11g standard. Other communication protocols may be used for the WLAN 104 in other embodiments such as, for example, IEEE 802 11n, IEEE 802.16e (also referred to as Worldwide Interoperability for Microwave Access or WiMAX), or IEEE 802.20 (also referred to as Mobile Wireless Broadband Access). The WLAN 104 includes one or more wireless RF Access Points (AP) 114 (one of which is shown in Figure 1) that collectively provide a WLAN coverage area.

The WLAN 104 may be a personal network of the user, an enterprise network, or a hotspot offered by an Internet service provider (ISP), a mobile network provider, or a property owner in a public or semi-public area, for example. The access points 114 are connected to an access point (AP) interface 116 which may connect to the wireless connector system 120 directly (for example, if the access point 114 is part of an enterprise WLAN 104 in which the wireless connector system 120 resides), or indirectly via the transport facilities 112 if the access point 14 is a personal Wi-Fi network or Wi-Fi hotspot (in which case a mechanism for securely connecting to the wireless connector system 120, such as a virtual private network (VPN), may be used). The AP interface 116 provides translation and routing services between the access points 114 and the wireless connector system 120 to facilitate communication, directly or indirectly, with the wireless connector system 120.

The wireless connector system 120 may be implemented as one or more servers, and is typically located behind a firewall 113. The wireless connector system 120 manages communications, including email communications, to and from a set of managed mobile communication devices 201. The wireless connector system 120 also provides administrative control and management capabilities over users and mobile communication devices 201 which may connect to the wireless connector system 120.

The wireless connector system 120 allows the mobile communication devices 201 to access the network 124 and connected resources and services such as a messaging server 132 (for example, a Microsoft Exchange™, IBM Lotus Domino™ or Novell GroupWise™ email server), and a content server 134 for providing content such as Internet content or content from an organization's internal servers, and application servers 136 for implementing server-based applications such as instant messaging (IM) applications to mobile communication devices 201.

The wireless network gateway 110 is adapted to send data packets received from the mobile communication device 201 over the WWAN 102 to the wireless connector system 120. The wireless connector system 120 then sends the data packets to the appropriate connection point such as the messaging server 132, content server 134 or application servers 136. Conversely, the wireless connector system 120 sends data packets received, for example, from the messaging server 132, content server 134 or application servers 136 to the wireless network gateway 110 which then transmit the data packets to the destination mobile communication device 201. The AP interfaces 116 of the WLAN 104 provide similar sending functions between the mobile communication device 201, the wireless connector system 120 and network connection point such as the messaging server 132, content server 134 and application server 136.

The messaging server 132 may manage and store an enterprise contact information datastore (also referred to as a global address book datastore) (not shown) as well as synchronized copies of contact information datastores of respective users (also referred to as personal address book datastores). As understood to persons skilled in the art, the global address book datastore comprises electronic contact records created and maintained by an IT (information technology) administrator of the network 124. Typically, the global address book datastore is maintained exclusively by the messaging server 132 and there is no local copy on the mobile communication devices 201; however, it is possible that a local copy is stored in the devices 201. In addition, the global address book datastore typically comprises contact records for all users of the respective network 124 (e.g., enterprise). The contact records in the global address book datastore may be one or more of individual contact records (or user records) or a group address or distribution list which lists multiple individual (users).

The network 124 may comprise a private local area network, metropolitan area network, wide area network, the public Internet or combinations thereof and may include virtual networks constructed using any of these, alone, or in combination.

Mobile communication devices 201 may alternatively connect to the wireless connector system 120 using a computer 117, such as desktop or notebook computer, via the network 124. A link 106 may be provided for exchanging information between the mobile communication device 201 and computer 117 connected to the wireless connector system 120. The link 106 may comprise one or both of a physical interface and short-range wireless communication interface.

It will be appreciated that the above-described communication system is provided for the purpose of illustration only, and that the above-described communication system comprises one possible communication network configuration of a multitude of possible configurations for use with the mobile communication devices 201. The teachings of the present disclosure may be employed in connection with other types of networks and associated devices that are effective in implementing or facilitating wireless communication. Suitable variations of the communication system will be understood to a person of skill in the art and are intended to fall within the scope of the present disclosure.

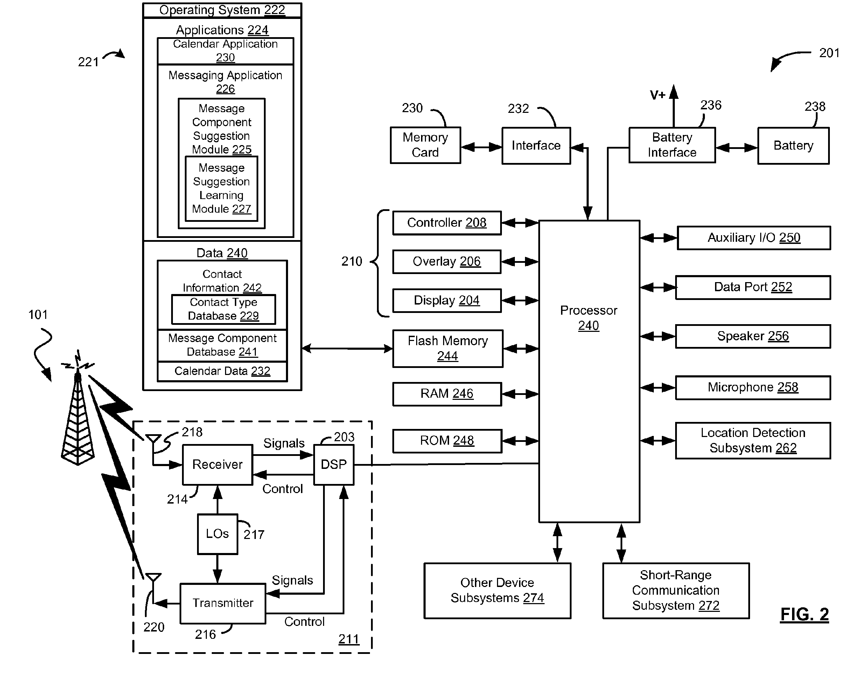

Reference is now made to Figure 2 which illustrates a mobile communication device 201 in which example embodiments described in the present disclosure can be applied. The mobile communication device 201 is, in some embodiments, a two-way communication device having data and possibly also voice communication capabilities, and the capability to communicate with other computer systems, for example, via the Internet. In at least some embodiments, the mobile communication device 201 is a handheld device.

The mobile communication device 201 includes a controller comprising at least one processor 240 such as a microprocessor which controls the overall operation of the mobile communication device 201, and a wireless communication subsystem 211 for exchanging radio frequency signals with the wireless network 101. The processor 240 interacts with the communication subsystem 211 which performs communication functions. The processor 240 interacts with additional device subsystems. In some embodiments, the device 201 may include a touch-sensitive display 210 which includes a display screen 204, such as a liquid crystal display (LCD) screen, with a touch-sensitive input surface or overlay 206 connected to an electronic controller 208. In other embodiments, a conventional display screen 204 may be provided instead of the the touch-sensitive display 210 and input may be provided via one or more control keys, a keyboard or keypad, navigation device, or any combination thereof.

The processor 240 interacts with additional device subsystems including flash memory 244, random access memory (RAM) 246, read only memory (ROM) 248, auxiliary input/output (I/O) subsystems 250, data port 252 such as serial data port, such as a Universal Serial Bus (USB) data port, speaker 256, microphone 258, a location detection subsystem 262, short-range communication subsystem 272, and other device subsystems generally designated as 274. Some of the subsystems shown in Figure 2 perform communication-related functions, whereas other subsystems may provide "resident" or on-device functions. The location detection subsystem 262 could be a GPS (Global Positioning System) subsystem comprising a GPS transceiver for communicating with a GPS satellite network (not shown), or may obtain or determine location information using other means such as triangulation via base stations 108 or accessing other location services.

The auxiliary I/O subsystems 250 may include other input devices such as one or more control keys, a keyboard or keypad, navigation device, or any combination thereof. The navigation device may be a depressible/clickable trackball, a depressible/clickable scroll wheel, a touch-sensitive optical trackpad, or a touch-sensitive touchpad.

The communication subsystem 211 includes a receiver 214, a transmitter 216, and associated components, such as one or more antenna elements 218 and 220, local oscillators (LOs) 217, and a processing module such as a digital signal processor (DSP) 203. The antenna elements 218 and 220 may be embedded or internal to the mobile communication device 201 and a single antenna may be shared by both receiver and transmitter, as is known in the art. As will be apparent to those skilled in the field of communication, the particular design of the communication subsystem 211 depends on the wireless network 101 in which the mobile communication device 201 is intended to operate.

The mobile communication device 201 may communicate with any one of a plurality of fixed transceiver base stations 108 (Figure 1) of the wireless network 101 within its geographic coverage area. The mobile communication device 201 may send and receive communication signals over the wireless network 101 after a network registration or activation procedures have been completed. Signals received by the antenna 218 through the wireless network 101 are input to the receiver 214, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 203. In a similar manner, signals to be transmitted are processed, including modulation and encoding, for example, by the DSP 203. These DSP-processed signals are input to the transmitter 216 for digital-to-analog (D/A) conversion, frequency up conversion, filtering, amplification, and transmission to the wireless network 101 via the antenna 220. The DSP 203 not only processes communication signals, but may also provide for receiver and transmitter control. For example, the gains applied to communication signals in the receiver 214 and the transmitter 216 may be adaptively controlled through automatic gain control algorithms implemented in the DSP 203.

The processor 240 operates under stored program control and executes software modules 221 stored in memory such as persistent memory; for example, in the flash memory 244.

The software applications 224 may include a range of other applications, including, for example, a calendar application, and/or a notepad application. In some embodiments, the software applications 224 include a push content viewing application, a voice communication (i.e. telephony) application, a map application, and a media player application. Each of the software applications 224 may include layout information defining the placement of particular fields and graphic elements (e.g. text fields, input fields, icons, etc.) in the user interface (i.e. the display screen 204) according to the application.

Those skilled in the art will appreciate that the software modules 221 or parts thereof may be temporarily loaded into volatile memory such as the RAM 246. The RAM 246 is used for storing runtime data variables and other types of data or information, as will be apparent to those skilled in the art. Although specific functions are described for various types of memory, this is merely one example, and those skilled in the art will appreciate that a different assignment of functions to types of memory may also be used.

In some embodiments, the mobile communication device 201 also includes a memory module such as a removable memory card 230 (typically comprising flash memory) and a memory card interface 232. Network access may be associated with a subscriber or user of the mobile communication device 201 via the memory card 230, which may be a Subscriber Identity Module (SIM) card for use in a GSM network or other type of memory card for use in the relevant wireless network type. The memory card 230 is inserted in or connected to the memory card interface 232 of the mobile communication device 201 in order to operate in conjunction with the wireless network 101.

The mobile communication device 201 also includes a battery 238 as a power source, which is typically one or more rechargeable batteries that may be charged, for example, through charging circuitry coupled to a battery interface 236 such as the serial data port 252. The battery 238 provides electrical power to at least some of the electrical circuitry in the mobile communication device 201, and the battery interface 236 provides a mechanical and electrical connection for the battery 238. The battery interface 236 is coupled to a regulator (not shown) which provides power V+ to the circuitry of the mobile communication device 201.

The short-range communication subsystem 272 is an additional optional component which provides for communication between the mobile communication device 201 and different systems or devices, which need not necessarily be similar devices. For example, the subsystem 272 may include an infrared device and associated circuits and components, or a wireless bus protocol compliant communication mechanism such as a Bluetooth® communication module to provide for communication with similarly-enabled systems and devices.

The mobile communication device 201 may provide two principal modes of communication: a data communication mode and an optional voice communication mode. In the data communication mode, a received data signal such as a text message, an email message, or Web page download will be processed by the communication subsystem 211 and input to the processor 240 for further processing. For example, a downloaded Web page may be further processed by a browser application or an email message may be processed by an email message application and output to the display 242. A user of the mobile communication device 201 may also compose data items, such as email messages, for example, using the input devices in conjunction with the display screen 204. These composed items may be transmitted through the communication subsystem 211 over the wireless network 101.

In the voice communication mode, the mobile communication device 201 provides telephony functions and operates as a typical cellular phone. The overall operation is similar, except that the received signals would be output to the speaker 256 and signals for transmission would be generated by a transducer such as the microphone 258. The telephony functions are provided by a combination of software/firmware (i.e., the voice communication module) and hardware (i.e., the microphone 258, the speaker 256 and input devices). Alternative voice or audio I/O subsystems, such as a voice message recording subsystem, may also be implemented on the mobile communication device 201. Although voice or audio signal output is typically accomplished primarily through the speaker 256, the display screen 204 may also be used to provide an indication of the identity of a calling party, duration of a voice call, or other voice call related information.

### Memory, Data and Datastore

As illustrated in Figure 2, the software modules 221 comprise operating system software 222, software applications 224 which include a messaging application 226 and, in at least some embodiments, a calendar application 230 and/or an address book application (not shown). The messaging application 226 permits a user to compose an electronic message, such as an email message or a short message service (SMS) text message. The messaging application 226 may also permit a user of the device 201 to view electronic messages received on the device 201, reply to electronic messages received on the device 201, compose and send electronic messages 201 from the device 201 to other computers, users or devices, for example, through the communication subsystem 211.

The calendar application 230 provides users with an electronic calendar which typically includes an appointment book. The calendar application 230 may provide a user interface for managing and viewing calendar data 232. The calendar application 230 may be used to allow a user to view, add, delete, or otherwise modify calendar data 232. The calendar data 232 may specify appointment data defining appointments of a user associated with the device 201.

The address book application may provide a user interface for managing and viewing contact information 242. The address book application may be configured to allow users to view, add, delete, and/or modify contact information 242 associated with one or more contacts. The address book application, calendar application 230, and/or the messaging application 226, in various embodiments, may be integrated with and/or provided by the operating system 222, stand-alone applications 224, or integrated into a single messaging application which provides the functionality of any of each of the combined applications.

Data 240 is stored in an erasable persistent memory, which in one example embodiment is the flash memory 244. The data 240 may include service data and/or user application data. The service data comprises information required by the mobile communication device 201 to establish and maintain communication with the wireless network 101. The user application data may include data such as email messages (not shown), contact information 242, calendar data 232, notepad documents (not shown) and image files (not shown).

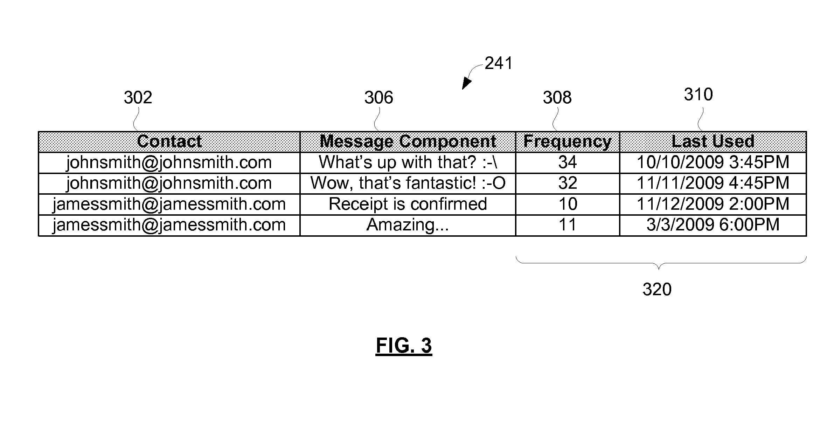

The data 240 includes a message component datastore which stores and tracks previously used message components which were sent from the device 201 and possibly a host computer 117 which shares a messaging account with the device 201, for example, which shares an email account. The shared messaging account is typically managed by the messaging server 134. The embodiments of the message component datastore are described below in various examples. In the example embodiment shown in Figures 2 and 3, a message component datastore 241 is shown. In other embodiments, the message component datastore may be the message component datastore 841, 1041, 1241 or 1441 described below. Figures 3, 8, 10, 12 and 14 illustrate the message component datastore using a table for the purpose of explanation. The shown datastore structure is for the purpose of explanation only and is not intended to be limited. The message component datastore may have any suitable structure which maintains the necessary relationships between the data which are required to perform the methods of the present disclosure.

The messaging application 226 also includes a message component suggestion module 225 for suggesting message components of an electronic message. As will be explained in greater detail below, the message component suggestion module 225 examine previously sent message components to suggest message components for inclusion in later messages.

The data 240 may include a contact type datastore 229 which includes contact information 242. The contact type datastore 229 may be a standalone datastore stored locally on the device 201 or included in another datastore such as, for example, the message component datastore 241. In other embodiments, the contact type datastore 229 may be stored remotely. The contact type datastore 229 associates contacts with one or more contact types, for example, by associating messaging addresses with a contact type.

The user application data may also include contact information 242 associated with a plurality of contacts. The contacts may include individuals and/or businesses, such as persons or businesses associated with one or more users of the mobile communication device. The contacts may also be categorized according to these individual and businesses categories. Individuals or businesses may also be saved as part of a group. The contact information 242 includes one or more messaging addresses 229 associated with at least one of the contacts. Each messaging address 229 specifies an address, such as an email address or a telephone number, which may be used by the contact for receiving electronic messages. The contact information 242 may be stored in a contact information datastore (sometimes referred to as an address book datastore or merely address book, contact list or contacts). Each contact in the contact information 242 may have a contact record in the contact information datastore which is accessible by the address book application 228.

In some embodiments, the contact information 242 may be stored in a remote contact information datastore in addition to, or instead of, the memory 244. The remote contact information datastore is typically stored and managed by the messaging server 132, or may be stored and managed by another network component such as the wireless connector system 120. Some or all of the contact information 242 may be synchronized between the local and remote contact information datastores, depending on the embodiment. In addition, the user application data including contact information 242 may be synchronized with a user's host computer 117 (Figure 1) in whole or in part in some embodiments.

The contact information 242 may include various categories or types of messaging addresses. Each messaging address may be categorized as an email address, a telephone number associated with SMS messaging, an IM address, or a unique identifier such as a personal identification number (PIN) which is associated with a specific mobile communication device 201 or user.

A messaging address is an address for use in sending an electronic message of a given type. The messaging addresses 229 may be, but not limited to, a mobile telephone number for a mobile telephone capable of receiving SMS and/or MMS messages, an email address, an IM identifier or address for an IM network, a user or device identifier such as a PIN for sending device-to-device messages (also referred to as peer-to-peer messages or PIN messages), an identifier within a private or proprietary communication system or network such as Facebook™, MySpace™ or Blackberry Groups™, or a SIP URI (session initiation protocol uniform resource identifier) for a Voice over Internet Protocol (VoIP) network.

The messaging application 226 may also include a message suggestion learning module 227 which is configured to parse sent messages to extract message components from sent messages and to update the message component datastore 241 with the extracted message components. The message suggestion learning module 227 may also update usage data in the message component datastore 241 associated with the message component. The usage data may include, for example, a frequency of use of the message component, a date and/or time of last use of the message component, and/or a log of instances of use of the message component.

### Example 1

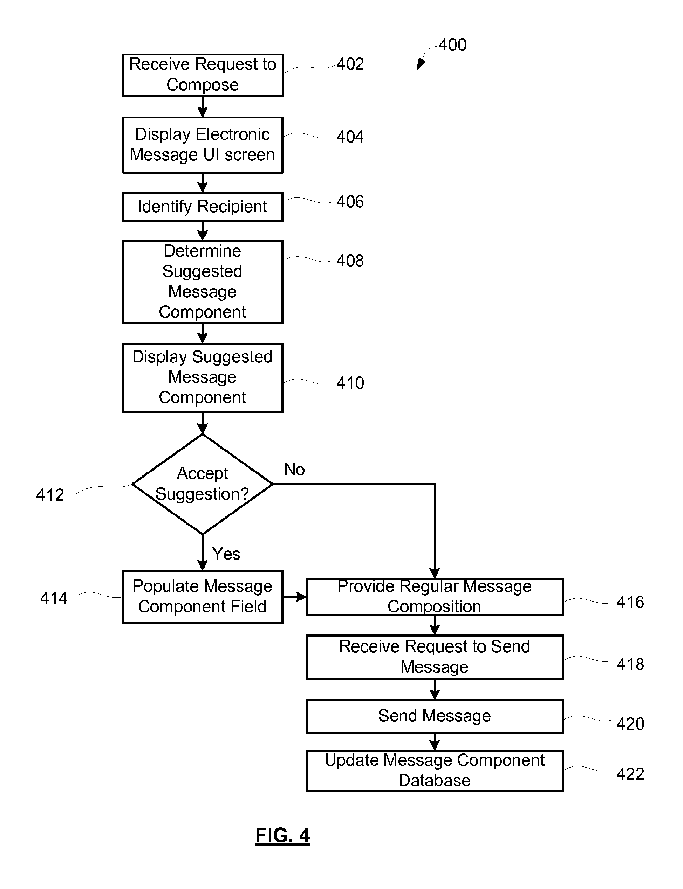

Referring now to Figures 3 and 4, a first example embodiment will be described. Figure 3 illustrates an example of a message component datastore 241 with which example embodiments of the present disclosure may be applied will now be described. The message component datastore 241 includes a number of message components 306. The message components 306 in the datastore 241 may relate to different portions of a message.

The message components 306 may represent a subject of a message, a message body of the message, or a specific portion of the message body (for example, a paragraph). For example, in some embodiments, the message components may relate to an address line which identifies how a message will be formally addressed within the message body (e.g., 'Dear John', 'Hi John', 'John', etc.), main body which typically contains the content of the message), a signature line which identifies the manner in which a message will be signed (e.g., 'Yours Truly, Frank', 'Best Regards, Frank', 'cya, Frank', etc.) or any combination thereof. In the shown embodiment, the message components 306 represent previously used main bodies of messages. The message components 306 are based on previously sent messages.

The message component datastore 241 includes the historical usage of the message components 306. The message component datastore 241 includes usage data 320 identifying the historical usage of the message components 306, i.e., the previous message component usage.

Each message component 306 may be associated with one or more contact identifiers 302, each identifying one or more contacts. In the shown embodiment, the contact identifier 302 is a messaging address associated with the contact to which a message which contained the message component 306 was previously sent. By way of example, the messaging address may include one or more of a telephone number, which may be used to store a telephone number which is associated with the contact and through which the contact may receive an SMS text message or MMS message; an IM address; an email address; and/or a unique identifier for sending device-to-device messages (also referred to as peer-to-peer messages or PIN messages). The unique identifier is different from the telephone number of the mobile communication device 201 and typically has a proprietary addressing format which may vary depending on the embodiment.

Device-to-device messages are sent using a carrier's wireless network infrastructure without interacting with the wireless connector system 120 as with email messages and other electronic messages. Depending on the architecture, if the carrier's wireless network infrastructure does not support PIN addressing a third party relay service which supports PIN addressing may be required. The relay service provides routing services and stores routing information required to route device-to-device messages from a sending device to one or more receiving device(s) using the carrier's wireless network infrastructure. The routing information comprises address mappings of device PINs (or other unique identifiers) to another form of device address supported by the carrier's wireless network infrastructure including, but not limited to, IP addresses of the mobile communication devices.

Other contact identifiers 302 may be used in other embodiments. For example, the contact identifier 302 associated with message components 306 in the datastore 241 may be a name (i.e. John Smith, James Smith) associated with a messaging address to which a message containing the associated message component 306 was previously sent.

The usage data 320 includes usage information specifying the historical usage of the message components 306 in previously sent messages. The usage data 320 may be a frequency of use 308 associated with the message component 306 which specifies the frequency with which the message component 306 has been used in previously sent messages to each contact. The frequency of use 308 may be specified, for example, as a total use count which specifies the total number of times the message component 306 has been used to send a message to its associated contact. The usage data 320 may include a last used identifier 310 which specifies the date and possibly the time when the message component 306 was last used in a previously sent message to each contact. The usage data 320 may be a log of all instances where the message component 306 was sent to the messaging address identified by the contact identifier. The usage data 320 may include any one or combination of the above-mentioned types. Other types of usage data 320 are also possible.

Reference will now be made to Figure 4 which illustrates a flowchart of a process 400 for assisted message generation in accordance with one example embodiment. The process 400 may be performed by a mobile communication device 201, and more specifically, the processor 240 of under the instruction of one or more of the messaging application 226, message suggestion module 225 or message suggestion learning module 227. In the example embodiment, the messaging application 226 is an email messaging application but may be another type of messaging application or possibly an integrated messaging application for sending more than one type of electronic message such an integrated messaging application for sending any two or more of email, SMS, MMS, PIN or IM messages.

First, at step 402 a request to compose an electronic message is received from a user via an input device. The request may be, for example, a request to forward a previously received message, a request to reply to a previously received message, a request to reply-to-all (i.e. send a response to the sender of the original message and additional parties who the original message was sent to) or a request to compose a new message.

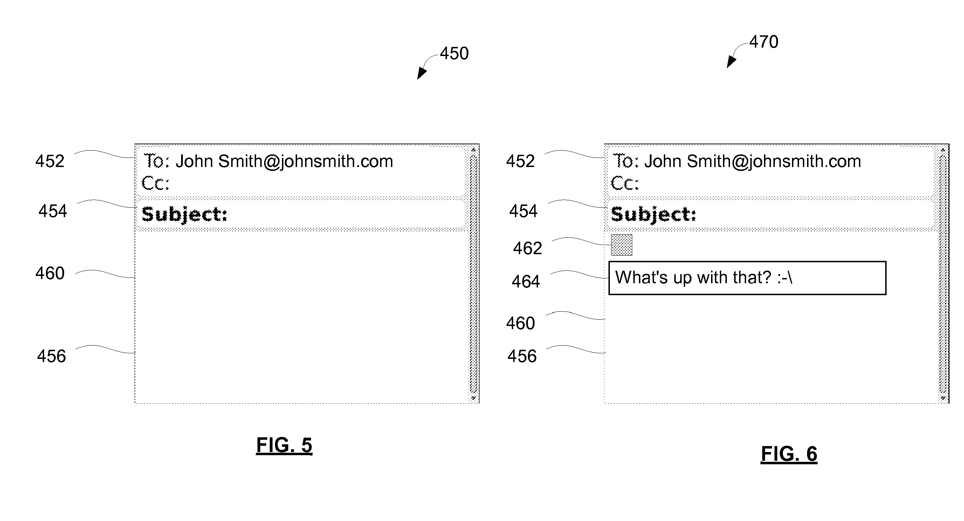

Next at step 404, in response to the request to compose the electronic message being received, an electronic message composition user interface screen is displayed on the display 204 of the device 201. An example electronic message composition user interface screen 450 will be discussed in greater detail below with respect to Figure 5.

Next, at step 406, one or more message recipients are identified. Where the request to compose the electronic message received at step 402 is a request to compose a new message or a request to forward a previously received message, the message recipients may be received via the input device. For example, a user may interact with an alphanumeric keyboard or keypad or a virtual keypad keyboard or keypad by a touch-sensitive display 210, to input an messaging address or other identifier which is associated with a message recipient into the address field 452 (Figure 5).

Message recipients may be identified by a contact name, messaging address, or both. For some categories of electronic messages, the message recipients may be identified in an address field associated with the message. The address field may be a 'To' field and may further include a carbon copy ('Cc') field for specifying one or more secondary recipients of the electronic message, and/or a blind carbon copy ('Bcc') field for specifying one or more secondary recipients of the electronic message who will not be displayed to the recipients in the 'To' field or the 'Cc' field.

Where the request to compose the electronic message is a request to reply to a previously received message, the messaging application 226 (Figure 2) may be configured to automatically identify the message recipient as the party from which the message being replied to was received (i.e., the sender of that message).

Next, at step 408, in response to one or more message recipients being identified, the message suggestion module 225 (Figure 2) automatically determines one or more suggested message components for the message from the message components 306 of the message component datastore 241 (Figure 3) in dependence on one or more of the message recipients identified at step 406.

The message suggestion module 225 may determine from the message component datastore 241, the message component 306 which was last used in a message sent to the message recipient identified at step 406. The message component 306 which was last used in a message sent to the message recipient may be determined, for example, from the last used identifier 310 in the message component datastore 241 (Figure 3).

Alternatively, the message suggestion module 225 may determine, from the message component datastore 241, the message component 306 which has been used most frequently in messages sent to the message recipient identified at step 406. The message component 306 (Figure 3) which was most frequently used may be determined, for example, from the frequency of use 308 (Figure 3) in the message component datastore 241 (Figure 3).

Other algorithms may be used to select one or more suggested message components based on usage data 320 (Figure 3) indicating the historical usage of message components 306 (Figure 3). For example, a number of the recently used message components or a number of most frequently used message components may be used to generate a number of suggested message components. The number of the recently used message components or most frequently used message components may be limited to a predetermined number the (e.g., 5 or 10), possibly in descending order.

Next, at step 410, the one or more suggested message components 306 are displayed on the display 204 (Figure 2).

Next, a determination is made whether a suggested message component 306 has been accepted or rejected (decision block 412). The one or more suggested message components may be selected by the user for example, using selection input via the input device. When one suggested message component 306 is displayed, the user may select to accept the suggested message component 306 or may select to reject the suggested message component 306. When more than one suggested message component 306 is displayed, the user may select one of the suggested message components 306, or reject the suggested message components 306.

When the user accepts a suggested message component 306, the messaging application 226 automatically populates an appropriate message component field associated with the suggested message component 306 (step 414). For example, where the suggested message component relates to a message body for a message, a message body field associated with the message is populated. Alternatively, where the suggested message component relates to a subject for the message, a subject field associated with the message is populated. More than one message component field may be populated, depending on the suggested message component 306.

When the user rejects the suggested message component 306, the messaging application 226 may provide the user with a user interface screen which permits the user to compose the message in the usual manner (step 416). That is, the user may compose the message by inputting alphanumeric characters via the input device.

Similarly, when the user accepts the suggested message component at step 412, after the appropriate message component field is populated at step 414, the messaging application 226 may provide the user with a user interface screen which permits the user to modify the contents of one or more message component fields associated with the message before transmitting it (step 416). This allows the user to modify message component fields by inputting alphanumeric characters via the input device.

Next, after the user has completed composing the message, a request may be received at the messaging application 226 from the user via the input device to send the message to the message recipients (step 418). In response to receiving the request, the message may be sent by the messaging application 226 to the message recipients (step 420).

Next, at step 422, in response to the sending the message, the message component datastore 241 (Figure 3) is updated by the message suggestion learning module 227. Updating the message component datastore 241 may include: parsing the sent message to identify message components 306320 in the message component datastore 241, updating usage data 320 in the message component datastore 241, or both. The identified message components 306 may be new or already present in the message component datastore 241. When the identified message components 306 is already present in the message component datastore 241, only the usage data 320 is used.

The message suggestion learning module 227 may operate automatically without user input or may utilize user input. For example, the user may assign a predetermined source key 1030 (described below) to the content of the sent electronic message. This could be in response to a prompt for the message suggestion learning module 227 or in response to a user request to update the message component datastore. The message suggestion learning module 227 may start automatically, or may be initiated by the user in response to user input. The user may be able to select the portion(s) of the sent electronic message which will be added to the message component datastore as a message component.

Referring now to Figures 5 and 6, example graphical user interface screens will now be described. Figure 5 illustrates an electronic message composition user interface screen 450 for the messaging application 226 (Figure 2) in which a user of the device 201 (Figure 2) is permitted to compose an electronic message 460. An electronic message 460 includes an address field 452 which, in the example illustrated, is a 'To' field. In the example illustrated, the 'To' field has been populated with a messaging address (i.e. johnsmith@johnsmith.com). In the example illustrated, the electronic message 460 in the message composition user interface screen 450 is an email message and the messaging address is an email address. However, the electronic message 460 may be of a different type such as an SMS message, MMS message, IM message or device-to-device message (such as a PIN message).

In the example illustrated, the electronic message 460 includes a subject field 454, which may be populated with a word or phrase describing the content of the message. The electronic message 460 also includes a message body field 456 which may be populated with the contents of the message.

Referring now to Figure 6, an example suggested message component user interface screen 470 which may be displayed in step 410 (Figure 4) will now be described. The suggested message component user interface screen 470 includes the features of the electronic message composition user interface screen 450 of Figure 5, and further includes a suggested message component display field 464 which displays a suggested message component. In the shown example, suggested message component is the message body "What's up with that? :-\". The suggested message component user interface screen 470 permits a user to select via an input device whether they would like to use the suggested message component in the suggested message component display field 464. In the example of Figure 6, the suggested message component may be selected for use by moving a navigational focus item 462 (which may be a cursor or a caret) to the message component display field 464 and providing predetermined selection input.

### Example 2

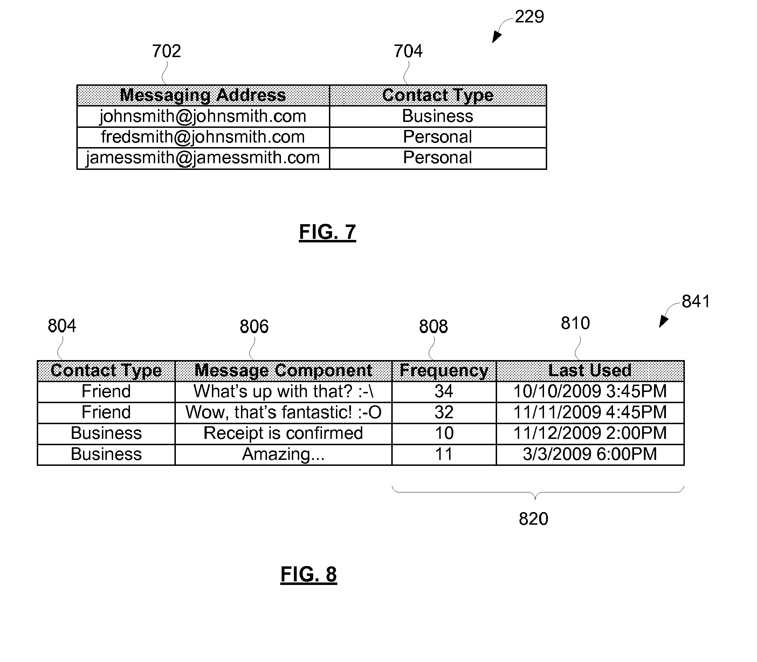

Referring now to Figures 7 to 9, another example embodiment will be described. In this embodiment, the message component datastore relates previously used message components 306 (Figure 8) to contact types, and relates each message recipient to a contact type, for example, in a contact type datastore 229 (Figure 7). The contact types may, for example, define a relationship between the user of the device 201 and the respective message recipients. By way of example, the contact types may include any combination of: personal (which may be used for non-business contacts), friend, business, relative, client, boss or employee. Other contact types may also be used.

Classifying messages in accordance with a contact type allows message components added to the message component datastore in response to a message sent by the user to one recipient to be used when sending future messages to other recipients of the same contact type. This allows the message component datastore to be populated more rapidly. For example, if two contacts (e.g., "John Smith" and "James Smith") are labelled as friends in the contact type datastore 229, messages sent to either of these contacts may result in a message component 806 being added to the message component datastore, usage data 820 with respect to the friend contact type being updated in the message component datastore (Figure 8), or both.

Additionally, the message suggestion module 225 may suggest a message component for a message being sent to a first contact (i.e., John Smith) even when that message component was not previously included in any messages sent to that first contact. For example, a message component that was included in a message sent to a second contact (i.e., James Smith) may be suggested if the second contact and the first contact have a common contact type (for example, if they are both "friends" of the user of the device 201).

Figure 7 illustrates an example contact type datastore 229. The contact type datastore 229 associates contacts with one or more contact types 704. In the example shown, the contacts are associated with contact types by associating a messaging address 702 associated with a contact with a contact type 704. Thus, the contact type datastore 229 provides the device 201 (Figure 2) with the ability to look up a contact type 704 associated with a contact. By way of example, the messaging address 702 may include one or more of a telephone number, which may be used to store a telephone number which is associated with the contact and through which the contact may receive an SMS text message or MMS message; an instant messaging address; an email address; and/or a unique identifier for sending device-to-device messages (also referred to as peer-to-peer messages or PIN messages).

The contact type datastore 229 may include additional information not illustrated in Figure 7. For example, in at least some embodiments, the contact type datastore 229 may include other information associated with contacts, including, for example, a telephone number associated with the contact, a title associated with the contact, a business associated with the contact, etc.

While Figure 7 illustrates an embodiment in which contacts are associated with a contact type 704 by associating the messaging address 702 of a contact with a contact type 704, in other embodiments, contacts may be associated with contact types 704 in other ways. For example, in some embodiments, the contact type datastore 229 may relate a contact name to a contact type 704 instead of, or in addition to a messaging address 702.

Figure 8 illustrates another example of a message component datastore 841. The message component datastore 841 associates contact types 804 with one or more message components 806. The message component datastore 841 also includes usage data 820 specifying historical usage of the message components in messages sent to contacts of each specified contact type 804. The usage data 820 may comprise a frequency of use 808, a last used identifier 810 or both, or other type of usage data. The message component datastore 841 is similar to the message component datastore 241 except that the message components 806 and usage data 820 are associated with contact types 804 instead of specific contacts.

Each message component 806 is associated with a contact type 804. The contact types 804 of the message component datastore 841 correspond to the contact types 704 in the contact type datastore 229 of Figure 7. The contact types 804 may, for example, define a relationship between the user of the device 201 and the respective message recipients. By way of example, the contact types may include any combination of: personal (which may be used for non-business contacts), friend, business, relative, client, boss or employee. Other contact types may also be used.

The usage data 820 may include, for example, a frequency of use 808 associated with the message component 806 which specifies the frequency with which the message component 806 has been used in previously sent messages to contacts of each contact type 804. The frequency of use 808 may be specified, for example, as a total use count which specifies the total number of times the message component 806 has been used to send a message to a contact of its associated contact type 804.

The usage data 820 may, in some embodiments, include a last used identifier 88 which specifies the date and possibly the time when the message component 806 was last used in a previously sent message to contacts of the contact type 804 associated with the message component 806.

In other embodiments, the usage data 820 may be a log of all instances where the message component 806 was sent to contacts of the contact type 804 associated with the message component 806.

Other types of usage data 820 are also possible.

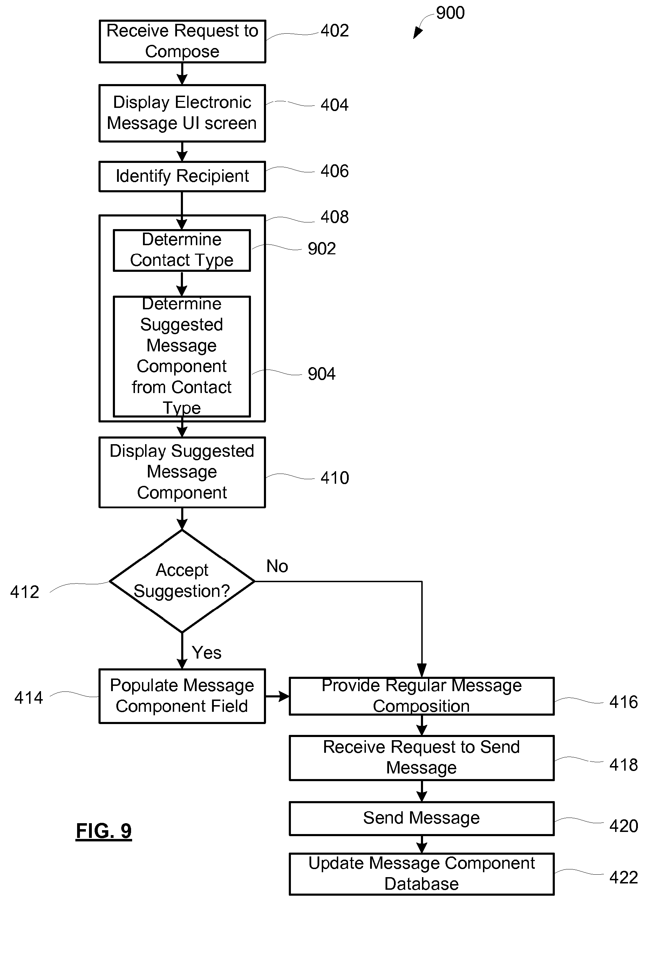

Reference will now be made to Figure 9 which illustrates a flowchart of a process 900 for assisted message generation in accordance with another example embodiment. The process 900 may be performed by a mobile communication device 201, and more specifically, the processor 240 of under the instruction of one or more of the messaging application 226, message suggestion module 225 or message suggestion learning module 227. In the example embodiment, the messaging application 226 is an email messaging application but may be another type of messaging application or possibly an integrated messaging application for sending more than one type of electronic message such an integrated messaging application for sending any two or more of email, SMS, MMS, PIN or IM messages. The process 900 may use the contact type datastore 229 of Figure 7 together with the message component datastore 841 of Figure 8 to suggest message components.

The process 900 is similar to the process 400 except that suggested message components are based on contact type 804. The step 408 of automatically determining one or more suggested message components for the message from the message components of a message component datastore from the process 400 is implemented using steps 902 and 904, described below.

As in the process 400 described above, after a recipient of the message has been identified at step 406, the message component suggestion module 225 attempts to determine a suggested message component. In step 902, a contact type 804 associated with the message recipient(s) is identified at step 406 is determined from the contact type datastore 229. Next, in step 904, one or more suggested message components are determined from the message component datastore 841 and in dependence on the determined contact type 704.

The message component suggestion module 225 may determine suggested message components by looking up message components 806 associated with the contact type 804 in the message component datastore 841. The message component suggestion module 225 may also make the determination based on the usage data 820 in the message component datastore 841. For example, in some embodiments, the message component suggestion module 225 may determine from the message component datastore 841 the message component 806 which was last used in a message sent to a message recipient of the same contact type 804 as the contact type 704 identified at step 902. The message component 806 which was last used in a message sent to a message recipient of the same contact type may be determined, for example, from the last used identifier 810.

Alternatively, the message component suggestion module 225 may determine, from the message component datastore 841, the message component 806 which has been used most frequently in messages sent to the message recipients of a contact type which is the same as the contact type 704 identified at step 902. The message component 806 which was most frequently used may be determined, for example, from a frequency of use 808 in the message component datastore 841.

Other algorithms may be used to select a suggested message component based on usage data 820 (Figure 8) indicating the historical usage of message components 806. For example, a number of the recently used message components or a number of most frequently used message components may be used to generate a number of suggested message components. The number of the recently used message components or most frequently used message components may be limited to a predetermined number the (e.g., 5 or 10), possibly in descending order.

### Example 3

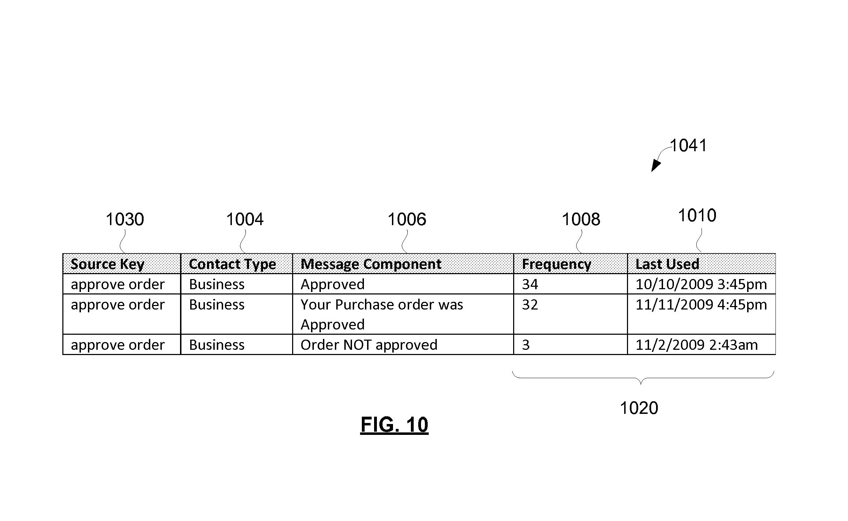

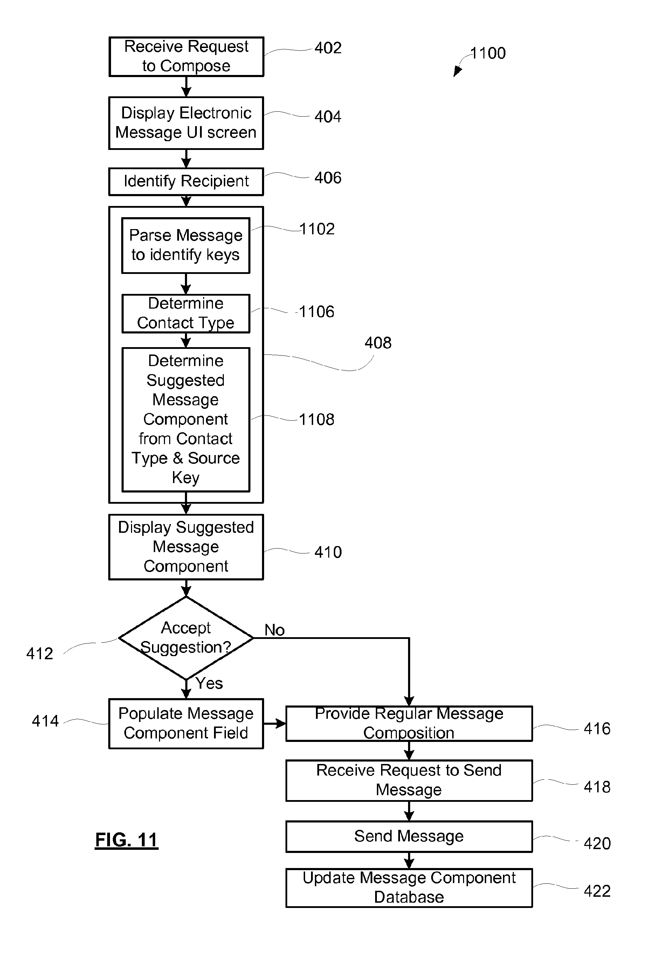

Referring now to Figures 10 and 11, a further example embodiment will be described. To increase the accuracy of suggested message components, message components 1006 in a message component datastore 1041 are associated with one or more predetermined source keys 1030. The predetermined source keys 1030 are strings associated with the content in previously sent messages. The predetermined source keys 1030 may be included in previously sent messages, or may be determined based on the content in previously sent messages. The predetermined source keys 1030 may be determined automatically by the message suggestion learning module 227 or may be assigned by the user. The predetermined source keys 103 may be a predetermined word, phrase, sentences, and/or paragraph, or a pattern or combination thereof. When messages are sent to recipients, message components 1006 which are determined to be associated with the same source key 1030 may be suggested by the message component suggestion module 225.

Figure 10 illustrates a message component datastore 1041 which is similar to the message component datastore 1041 except that message components 1006 are associated with a source key 1030, as well as a contact type 1004 and usage data 1020 specifying historical usage of the message components in messages sent to contacts of each source key 1030. The usage data 1020 may comprise a frequency of use 1008, a last used identifier 1010 or both, or other type of usage data.

In the shown embodiment, each message component 1006 is associated with both a source key 1030 and a contact type 1004. The contact types 1004 of the message component datastore 1041 correspond to the contact types 704 (Figure 7) in the contact type datastore 229 (Figure 7). In other embodiments, at least some of the message component 1006 may be associated with only a source key 1030.

The usage data 1020 may include, for example, a frequency of use 1008 associated with the message component 1006 which specifies the frequency with which the message component 1006 has been used in previously sent messages to contacts of each contact type 1004 in response to received messages containing the associated source key 1030. The frequency of use 1008 may be specified, for example, as a total use count which specifies the total number of times the message component 1006 has been used to send a message to a contact of its associated contact type 1004 in response to received messages containing the associated source key 1030.

The usage data 1020 may, in some embodiments, include a last used identifier 1010 which specifies the date and possibly the time when the message component 1006 was last used in a previously sent message to contacts of the contact type 1004 associated with the message component 1006 in response to received messages containing the associated source key 1030.

In other embodiments, the usage data 1020 may be a log of all instances where the message component 1006 was sent to contacts of the contact type 1004 associated with the message component 1006 in response to received messages containing the associated source key 1030.

Other types of usage data 1020 are also possible.

Reference will now be made to Figure 11 which illustrates a flowchart of a process 1100 for assisted message generation in accordance with a further example embodiment. The process 1100 may be performed by a mobile communication device 201, and more specifically, the processor 240 of under the instruction of one or more of the messaging application 226, message suggestion module 225 or message suggestion learning module 227. In the example embodiment, the messaging application 226 is an email messaging application but may be another type of messaging application or possibly an integrated messaging application for sending more than one type of electronic message such an integrated messaging application for sending any two or more of email, SMS, MMS, PIN or IM messages. The process 1100 may use the contact type datastore 229 of Figure 7 together with the message component datastore 1041 of Figure 10 to suggest message components.

The process 1100 of Figure 11 is similar to the process 400 of Figure 4 except that suggested message components are based on a contact type 1004 and source keys 1030. The process 1100 is typically performed on reply messages sent in response to a received message. The step 408 of automatically determining one or more suggested message components for the message from the message components of a message component datastore from the process 400 is implemented using steps 1102, 1106 and 1108, described below. The steps 1102, 1106 and 1108 are performed instead of steps 902 and 904 of the process 900.

As in the process 400 described above, after a recipient of the message has been identified at step 406, the message component suggestion module 225 attempts to determine a suggested message component. In step 1102, the message component suggestion module 225 parses a received message which is related to the request to reply received at step 402. The message component suggestion module 225 attempts to determine whether the received message contains any of the source keys 1030 in the message component datastore 1041 of Figure 10.

Next, at step 1106, a contact type 704 associated with the message recipient identified at step 406 is determined. In at least some embodiments, the contact type 704 associated with the message recipient is determined from a contact type datastore 229.

Next, in step 1108, after a contact type associated with the message recipient has been determined and any source keys 1030 in the received message have been identified, the message component suggestion module 225 may use that contact type 704 and source key(s) 1030 to determine a suggested message component.

The message component suggestion module 225 may determine suggested message components by looking up message components 1006 associated with the source key 1030 and possibly the contact type 1004 in the message component datastore 1041. The message component suggestion module 225 may also make the determination based on the usage data 1020 in the message component datastore 1041. For example, in some embodiments, the message component suggestion module 225 may determine from the message component datastore 1041 the message component 1006 which was last used in a message sent to a message recipient of the same contact type 1004 as the contact type 704 identified at step 1106 in response to a message being received that contained the source key 1030. The message component 1006 which was last used in a message sent to a message recipient of the same contact type 1004 in response to a received message containing the source key 1030 may be determined, for example, from the last used identifier 1010.

Alternatively, the message component suggestion module 225 may determine, from the message component datastore 1041, the message component 1006 which has been used most frequently in messages sent to the message recipients of a contact type 1004 which is the same as the contact type 704 identified at step 1106 in response to messages being received that contain the same source key 1030 as the key identified at step 1102.

The message component which was most frequently used may be determined, for example, from a frequency of use 1008 in the message component datastore 1041. Other algorithms may be used to suggest a message component based on usage data 1020 indicating the historical usage of message components 1006.

When the message components 1006 in the message component datastore 1041 are associated with only a source key 1030 and not a contact type 1004, the step 1106 of determining a contact type in the process 1100 may be eliminated and the step 1108 of determining a suggested message component is modified to determine suggested message components based on only a source key 1030.

### Example 4

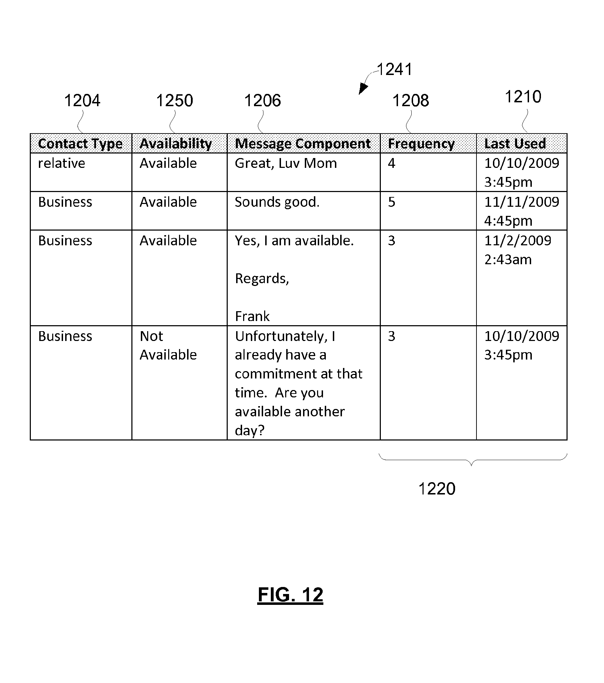

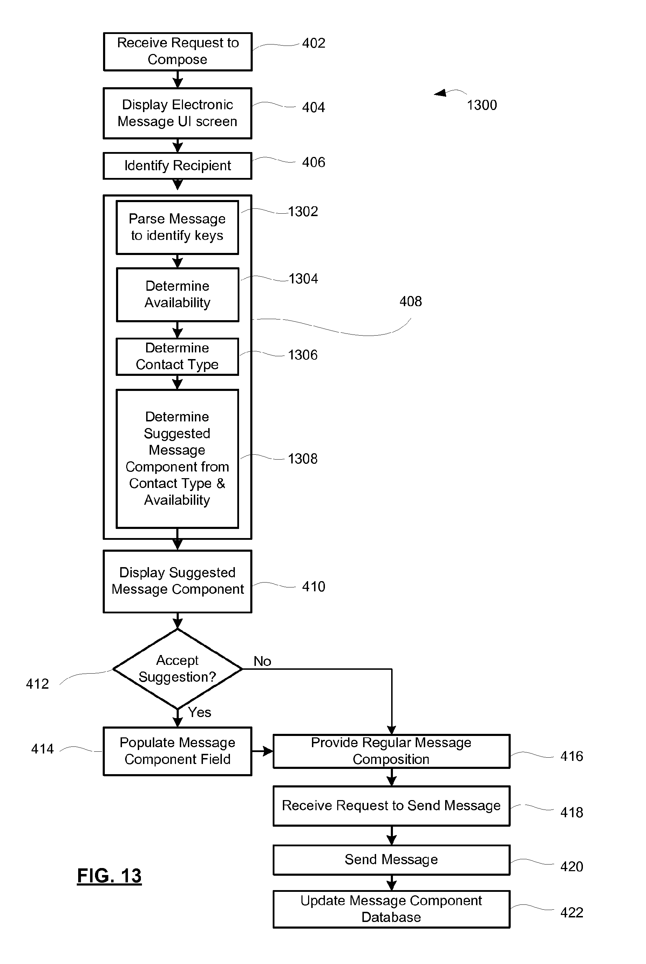

Referring now to Figures 12 and 13, a further example embodiment will be described. Figure 12 illustrates a message component datastore 1241 which is similar to the message component datastore 1041 except that message components 1206 are associated with availability indicators 1250 rather than source keys 1030, as well as a contact type 1204 and usage data 1220 specifying historical usage of the message components sent to contacts with respect to each availability indicator 1250. The usage data 1220 may comprise a frequency of use 1208, a last used identifier 1210 or both, or other type of usage data. The contact types 1204 of the message component datastore 1241 correspond to the contact types 704 in the contact type datastore 229.

The availability indicators 1250 specify availability conditions which must be met for the message component 1206 to be suggested. For example, the availability indicators 1250 may specify whether the respective recipient (also referred to as a user or contact) is available or unavailable. In such instances, the value of the availability indicator 1250 corresponding to the availability status of the recipient (shown for the purpose of illustration as the strings "available" or "unavailable."). When the availability indicator 1250 associated with a message component 1206 is "available" it may be suggested, however, when the availability indicator 1250 associated with a message component 1206 is "unavailable" it may not be suggested.

In some embodiments, the availability indicator 1250 may specify that the respective recipient is tentatively unavailable (e.g., if they have a "tentative" appointment already scheduled). Depending on the rules, the associated message components 1206 may or may not be suggested when the availability indicator 1250 associated with a message component 1206 is "tentatively unavailable".

The use of availability indicators 1250 in the message component datastore 1241 may advantageously increase the accuracy of suggested message components in response to a received message which inquires as to the availability of its recipient. The request may, for example, inquire as a specific date and/or time, or a range of dates and/or times. In some embodiments, the message component suggestion module 225 may be configured to automatically determine or attempt to determine the availability of the recipient when known, and to suggest a message component based at least in part on that availability.

The usage data 1220 specifies the historical usage of the message components 1206 in previously sent messages. The usage data 1220 may include, for example, a frequency of use 1208 associated with the message component 1206 which specifies the frequency with which the message component 1206 has been used in previously sent messages to contacts of each contact type 1204 under an availability condition corresponding to the availability indicator 1250.

The frequency of use 1208 may be specified, for example, as a total use count which specifies the total number of times the message component 1206 has been used to send a message to a contact of its associated contact type 1204 under availability conditions specified by the availability indicator 1250. For example, the first entry of the example message component datastore 1241 indicates that the message component 1206 "Great, Luv Mom" was sent four times to message recipients who were relatives when it was determined that the user of the device 201 was available. Similarly, the last entry of the example message component datastore 1241 indicates that the message component "Unfortunately, I already have a commitment at that time. Are you available another day?" was sent to message recipients who were business contacts three times when it was determined that the user of the device 201 was unavailable.

The usage data 1220 may, in some embodiments, include a last used identifier 1210 which specifies the date and possibly the time when the message component 1206 was last used in a previously sent message to contacts of the contact type 1204 associated with the message component 1206 under the availability condition specified by the availability indicator 1250.

In other embodiments, the usage data 1220 may be a log of all instances where the message component 1206 was sent to contacts of the contact type 1204 associated with the message component 1206 under the availability condition specified by the availability indicator 1250.

Other types of usage data 1220 are also possible.

Reference will now be made to Figure 13 which illustrates a flowchart of a process 1300 for assisted message generation in accordance with a further example embodiment. The process 1300 may be performed by a mobile communication device 201, and more specifically, the processor 240 of under the instruction of one or more of the messaging application 226, message suggestion module 225 or message suggestion learning module 227. In the example embodiment, the messaging application 226 is an email messaging application but may be another type of messaging application or possibly an integrated messaging application for sending more than one type of electronic message such an integrated messaging application for sending any two or more of email, SMS, MMS, PIN or IM messages. The process 1300 may use the contact type datastore 229 of Figure 7 together with the message component datastore 1241 of Figure 12 to suggest message components.

The process 1300 of Figure 13 is similar to the process 400 of Figure 4 except that suggested message components are based on contact type 1304 and availability indicator 1250. The process 1300 is typically performed on reply messages sent in response to a received message. The step 408 of automatically determining one or more suggested message components for the message from the message components of a message component datastore from the process 400 is implemented using steps 1302 to 1308, described below.

As in the process 400 described above, after a recipient of the message has been identified at step 406, the message component suggestion module 225 attempts to determine a suggested message component. In step 1302, the message component suggestion module 225 parses the received message which is related to the request to reply received at step 402. The message component suggestion module 225 attempts to determine whether the received message contains a predetermined calendar key. A predetermined calendar key is a string which is interpreted by the message component suggestion module 225 as an inquiry as to the availability of its recipient. The predetermined calendar key may be a word, phrase, sentence, paragraph, or a pattern or combination of words, phrases, sentences, or paragraphs, which may be interpreted as an inquiry as to the availability of a recipient.

In some embodiments, the calendar key may include a date identifier, which indicates a specified date and/or time. The date identifier may be, for example, a day of the week (i.e. Monday, Tuesday, Wednesday, Thursday, Friday, Saturday, Sunday), or it may contain a numerical date and/or month and/or year (i.e. January 12, 2009).

In some embodiments, the calendar key may be a word or phrase within a predetermined proximity of the date identifier. For example, the word "lunch" may be interpreted as a calendar key if it occurs within 10 words from a date identifier (e.g., "Lunch this Thursday"). Other possible calendar keys may include, for example, "breakfast", "lunch", "supper", "morning", "noon", "aft", "afternoon", "evening", "dinner", "bite", "eat", "free", "available", "watch", the word "this" in front of a date identifier, the seven days of the week, the twelve months of the year, etc.

During the parsing operation of step 1302, the message component suggestion module 225 may attempt to determine a date, time, or range of dates and/or times to which the availability inquiry relates. In some embodiments, different calendar keys are associated with different requests dates and/or times. For example, if a high level calendar key such as, for example, "available", "free" or "ready", is found in the received message and no more specific calendar keys are found, the request may be interpreted as a request to determine the user's immediate availability.

If an activity related calendar key is found (e.g., "lunch", "dinner", "supper", "breakfast", "brunch", "movie"), the message component suggestion module 225 may relate that calendar key to a predetermined time associated with that calendar key (e.g., noon for "lunch", 6PM for "dinner", 9AM for "breakfast", 8PM for "movie"), unless a more specific calendar key is found in the received message. The predetermined time may, in some embodiments, be pre-configured by users of the device 201.

Next, at step 1304, the message component suggestion module 225 attempts to determine, from the calendar data 232 whether the user is available at the date and/or time indicated by the date identifier.

Next, at step 1306 a contact type 704 associated with the message recipient identified at step 406 may be determined. In at least some embodiments, the contact type 704 associated with the message recipient is determined from a contact type datastore 229.

Next, in step 1308, after a contact type 704 associated with the message recipient has been determined and availability has been determined, the message component suggestion module 225 may use that contact type 704 and availability indicator 1250 to determine a suggested message component. The message component suggestion module 225 may determine message components by looking up message components 1206 associated with the availability indicator 1250 and possibly the contact type associated with the message recipient in the message component datastore 1241 of Figure 12.

The message component suggestion module 225 may also make the determination based on the usage data 1220 in the message component datastore 1241. For example, in some embodiments, the message component suggestion module 225 may determine, from the message component datastore 1241, the message component which was last used in a message sent to a message recipient of the same contact type as the contact type identified at step 1306 under the same availability conditions. The message component 1206 which was last used in a message sent to a message recipient of the same contact type under the same availability conditions may be determined, for example, from the last used identifier 1210.

Alternatively, the message component suggestion module 225 may determine, from the message component datastore 1241, the message component 1206 which has been used most frequently in messages sent to the message recipients of a contact type 1204 which is the same as the contact type 704 identified at step 1306 under the same availability conditions.

The message component which was most frequently used may be determined, for example, from a frequency of use 1208 in the message component datastore 1241.

Other algorithms may be used to select a suggested message component based on usage data 1220 indicating the historical usage of message components 1206.

While Figures 12 and 13 illustrate an example embodiment in which message components are associated with both a contact type 1204 and an availability indicator 1250, in other embodiments the message components 1206 may be associated with an availability indicator 1250 and not a contact type 1204. That is, the message component datastore 1241 may track the usage of a message component in messages sent to any recipients under the same availability conditions. In such embodiments, the step 1306 of determining a contact type in may be eliminated and the step 1308 of determining a suggested message component is modified to determine suggested message components based on only an availability indicator 1250.

### Example 5

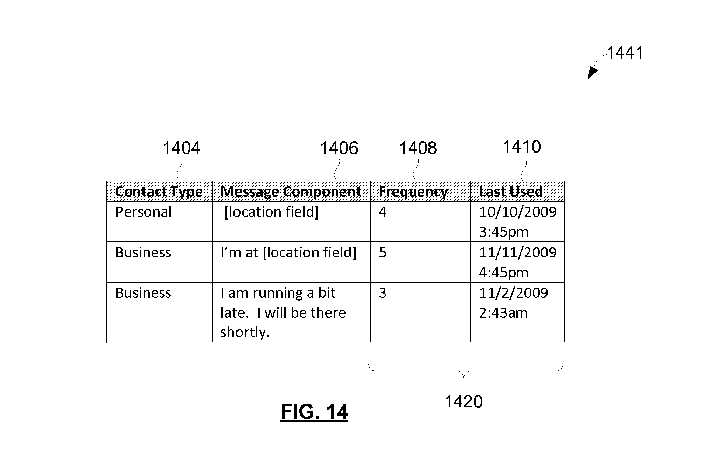

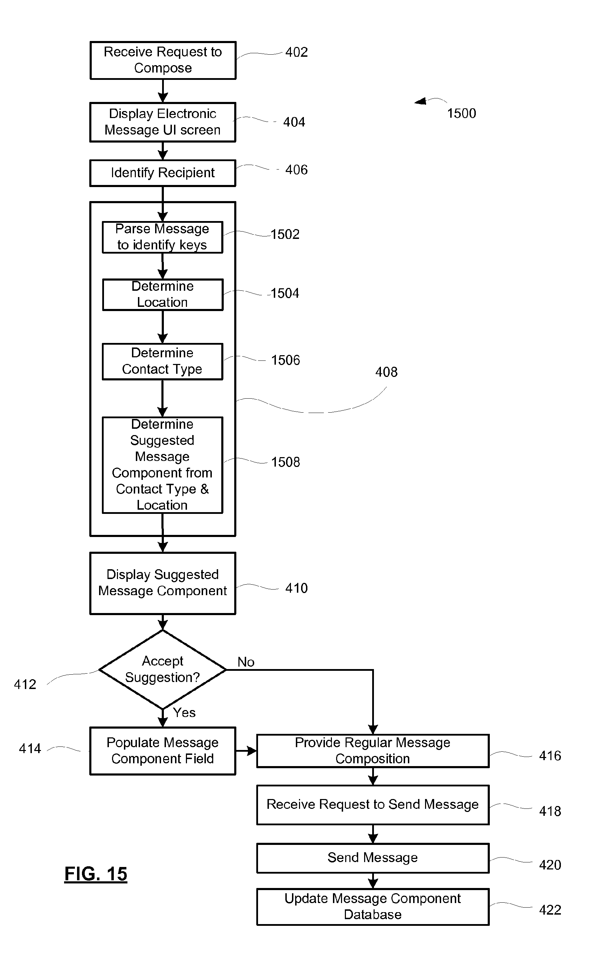

Referring now to Figures 14 and 15, a further example embodiment will be described. Figure 14 illustrates a message component datastore 1441 which is similar to the message component datastore 241 except that message components 1406 include a location field which may be populated with a current location determined from a location detection subsystem 262 (Figure 2). The message components 1406 are associated a contact type 1404 and usage data 1420 specifying historical usage of the message components in messages sent to contacts. The usage data 1420 may comprise a frequency of use 1408, a last used identifier 1410 or both, or other type of usage data. The contact types 1404 of the message component datastore 1441 correspond to the contact types 704 in the contact type datastore 229.

The use of location fields in the message component datastore 1441 may advantageously increase the accuracy of suggested message components in response to a received message which inquires as to the location of its recipient. In some embodiments, the message component suggestion module 225 may be configured to automatically determine or attempt to determine the location of the recipient, and to suggest a message component based at least in part on that location. As described below, the message component suggestion module 225 populates a location field in the suggested message component with the location determined at step 1504.

The usage data 1420 specifies the historical usage of the message components 1406 in previously sent messages. The usage data 1420 may include, for example, a frequency of use 1408 associated with the message component 1406 which specifies the frequency with which the message component 1406 has been used in previously sent messages to contacts of each contact type 1404. The frequency of use 1408 may be specified, for example, as a total use count which specifies the total number of times the message component 1406 has been used to send a message to a contact of its associated contact type 1404.

The usage data 1420 may, in some embodiments, include a last used identifier 1410 which specifies the date and possibly the time when the message component 1406 was last used in a previously sent message to contacts of the contact type 1404 associated with the message component 1406.

In other embodiments, the usage data 1420 may be a log of all instances where the message component 1406 was sent to contacts of the contact type 1404 associated with the message component 1406.

Other types of usage data 1420 are also possible.

Reference will now be made to Figure 15 which illustrates a flowchart of a process 1500 for assisted message generation in accordance with a further example embodiment. The process 1500 may be performed by a mobile communication device 201, and more specifically, the processor 240 of under the instruction of one or more of the messaging application 226, message suggestion module 225 or message suggestion learning module 227. In the example embodiment, the messaging application 226 is an email messaging application but may be another type of messaging application or possibly an integrated messaging application for sending more than one type of electronic message such an integrated messaging application for sending any two or more of email, SMS, MMS, PIN or IM messages. The process 1500 may use the contact type datastore 229 of Figure 7 together with the message component datastore 1441 of Figure 14 to suggest message components.

The process 1500 of Figure 15 is similar to the process 400 of Figure 4 except that suggested message components 1406 include a location field. The process 1500 is typically performed on reply messages sent in response to a received message. The step 408 of automatically determining one or more suggested message components for the message from the message components of a message component datastore from the process 400 is implemented using steps 1502 to 1508, described below.

As in the process 400 described above, after a recipient of the message has been identified at step 406, the message component suggestion module 225 attempts to determine a suggested message component. In step 1502, the message component suggestion module 225 parses the received message that is related to the request to reply received at step 402. The message component suggestion module 225 attempts to determine whether the received message contains a predetermined location key. A predetermined location key is a string which is interpreted by the message component suggestion module 225 as an inquiry as to the location of its recipient. The predetermined location key may be a word, phrase, sentence, paragraph, or a pattern or combination of words, phrases, sentences, or paragraphs, which may be interpreted as an inquiry as to the location of a recipient. By way of example, one possible location key may be the phrase "Where are you?"

Next, at step 1504, the message component suggestion module 225 attempts to determine, from the location detection subsystem 262 (Figure 2), the location of the device 201.

Next, at step 1506, a contact type 1404 associated with the message recipient identified at step 406 is determined. In at least some embodiments, the contact type 704 associated with the message recipient is determined from a contact type datastore 229.

Next, in step 1508, after a contact type 1404 associated with the message recipient a location determined have been determined, the message component suggestion module 225 may use that location and contact type 1404 to determine a suggested message component.

The message component suggestion module 225 may determine message components by looking up message components 1406 associated with contact type 1404 in the message component datastore 1441.

The message component suggestion module 225 may also make the determination based on the usage data 1420 in the message component datastore 1441. For example, in some embodiments, the message component suggestion module 225 may determine, from the message component datastore 1441, the message component 1406 which was last used in a message sent to a message recipient of the same contact type as the contact type identified at step 1406 in response to a received message containing a location key. The message component 1406 last used in a message sent to a message recipient of the same contact type in response to a received message containing a location key, may be determined, for example, from the last used identifier 1410.

Alternatively, the message component suggestion module 225 may determine, from the message component datastore 1441, the message component which has been used most frequently in messages sent to the message recipients of a contact type 1404 which is the same as the contact type 704 identified at step 1506 in response to received messages containing a location key.

The message component which was most frequently used may be determined, for example, from a frequency of use 1408 in the message component datastore 1441.

Other algorithms may be used to select a suggested message component based on usage data 1420 indicating the historical usage of message components 1406.

The message component suggestion module 225 populates a location field in the suggested message component with the location determined at step 1504.

While Figures 14 and 15 illustrate an example embodiment in which message components are associated with both a contact type 1404 and a location key, in other embodiments the message components 1406 may not be associated with a contact type in the message component datastore 1441. That is, the message component datastore 1441 may track the usage of a message component in messages sent to any message recipients in response to a received message containing a location key. In such embodiments, the step 1506 of determining a contact type may be eliminated and the step 1508 of determining a suggested message component is modified to determine suggested message components based on only a location key.

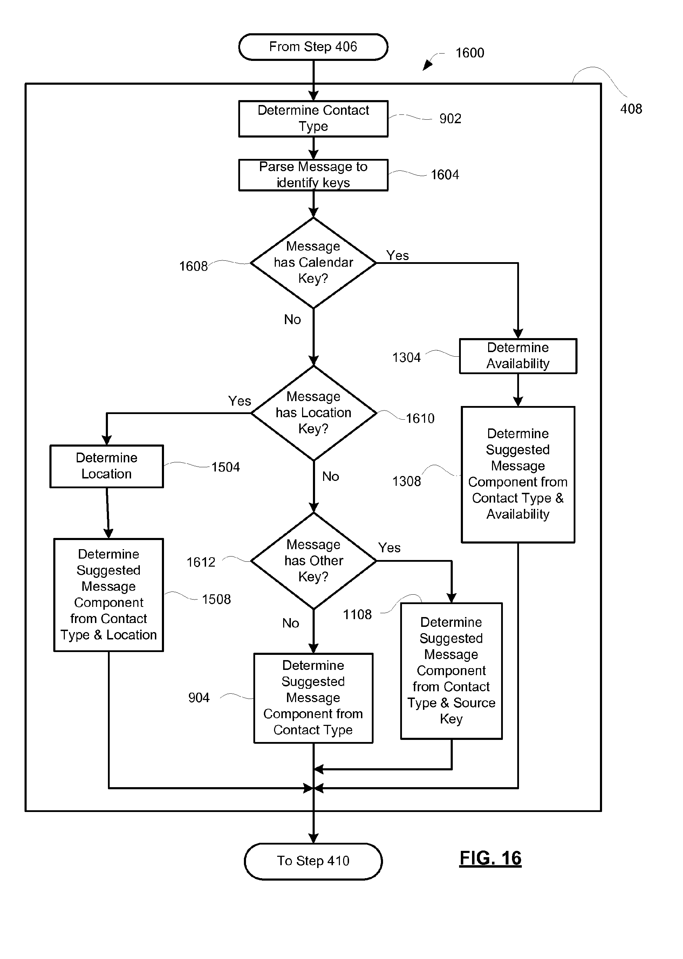

The processes 400, 900, 1100, 1300 and 1500 described above, or aspects thereof, may be combined into a single process. An example of such a combined process 1600 is shown in Figure 16. In the shown embodiment, the message component suggestion module 225 may determine a contact type in the manner as described above in relation to step 902 of the process 900.

Next, at step 1604, the message component suggestion module 225 may parse a received message to determine if any source keys (step 1612), calendar keys (step 1608), or location keys (step 1610) are present in the received message.

When calendar keys are present, the steps 1304 and 1308 of the process 1300 may be performed by the message component suggestion module 225 to suggest a message component based on availability.

When location keys are present, the steps 1504 and 1508 of the process 1500 may be used to suggest a message component based on a current location.

When source keys are found, the step 1108 of the process 1100 may be performed to suggest a message component based on the source key.

When no source keys, location keys, or calendar keys are found, the step 904 of the process 900 may be performed to suggest a message component based on a contact type.

While the embodiments described above may discuss a single message component being suggested, multiple message components may be suggested by the message component suggestion module 225. In such cases, the user may select a message component from multiple suggested message components as described above in connection with decision block 412. For example, in some embodiments a plurality of message components may be suggested in a ranked order.

In some embodiments the message component suggestion module 225 may perform a process to suggest message components after compostion of the message has begun, e.g. after the device user begins to type the contents of the message. In such embodiments, the message component suggestion module 225 may use the characters already input to further refine its suggested message components. For example, the message component suggestion module 225 may look for message components which contain characters corresponding to the characters already input.

While the processes 400, 900, 1100, 1300, 1500 and 1600 have been described as occurring in a particular order, it will be appreciated by persons skilled in the art that some of the steps may be performed in a different order provided that the result of the changed order of any given step will not prevent or impair the occurrence of subsequent steps. Furthermore, some of the steps described above may be combined in other embodiments, and some of the steps described above may be separated into a number of sub-steps in other embodiments.

The term "datastore" is used in the present disclosure to refer to an organized collection of data. The datastore may be organized as a database in which case a datastore may comprise a single database or multiple databases. The database(s) may be a distributed database with data distributed between one or more multiple locations, including the electronic device (e.g., mobile communication device) and/or remote servers in communication with the electronic device. For example, a local database of a device-based calendar application and a server-based corporate global address list (GAL) database (typically managed by a corporate messaging server) may be datastores which are both accessed by the electronic device at the same time. While examples of databases which may be used to implement a datastore are described, the term datastore is intended to capture other types of data storage systems suitable for use with the electronic device and methods described in the present disclosure.

While the present disclosure is described, at least in part, in terms of methods, a person of ordinary skill in the art will understand that the present disclosure is also directed to the various components for performing at least some of the aspects and features of the described methods, be it by way of hardware components, software or any combination of the two, or in any other manner. Moreover, the present disclosure is also directed to a pre-recorded storage device or other similar computer readable medium including program instructions stored thereon for performing the methods described herein.

The various embodiments presented above are merely examples and are in no way meant to limit the scope of this disclosure. Variations of the innovations described herein will be apparent to persons of ordinary skill in the art, such variations being within the intended scope of the present application. In particular, features from one or more of the above-described embodiments may be selected to create alternative embodiments comprised of a sub-combination of features which may not be explicitly described above. In addition, features from one or more of the above-described embodiments may be selected and combined to create alternative embodiments comprised of a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

## Claims

1. A method for assisted message generation on an electronic device, comprising:
receiving from an input device a request to compose an electronic message;
identifying a message recipient associated with the electronic message;
determining from a datastore comprising a plurality of message component a suggested message component for the electronic message in dependence on the identified message recipient; and
displaying the suggested message components on a display screen of the electronic device.

2. The method of claim 1, wherein determining the suggested message component comprises:
determining, from a first datastore, a contact type associated with the identified message recipient; and
determining, from a second datastore, the suggested message component for the electronic message in dependence on the contact type.

3. The method of claim 2, wherein determining the contact type comprises determining whether the identified message recipient is a business contact or a personal contact.

4. The method of claim 1, wherein the request to compose the electronic message is a request to reply to a received electronic message, wherein determining the suggested message component comprises:
parsing the received electronic message to determine whether one or more predetermined source keys are present in the received electronic message, the predetermined sources keys being associated with the content of message components in the datastore; and
determining the suggested message component in dependence on the identified message recipient and any predetermined source keys present in the received electronic message.

5. The method of claim 1, wherein the request to compose the electronic message is a request to reply to a received electronic message, wherein determining one or more suggested message components comprises:
parsing the electronic message to determine whether one or more predetermined calendar keys are present in the received electronic message; and
when one or more predetermined calendar keys are present in the received electronic message:
obtaining availability information from a calendar application associated with the electronic device; and
determining the suggested message component in dependence on the identified message recipient and the availability information.

6. The method of claim 1, wherein the request to compose the electronic message is a request to reply to a received electronic message, wherein determining one or more suggested message components comprises:
parsing the electronic message to determine whether one or more predetermined location keys are present in the received electronic message; and
when one or more predetermined location keys are present in the electronic message:
obtaining location information associated with the electronic message from a location detection subsystem of the electronic message; and
determining the suggested message component in dependence on the identified message recipient and the location information.

7. The method of claim 6, further comprising:
populating a location field in the suggested message component with the location information.

8. The method of any one of claims 1 to 7, further comprising;
receiving from the input device a request to send the electronic message; sending the electronic message to the identified message recipient; and updating a datastore with one or more message component from the sent electronic message.

9. The method of any one of claims 1 to 8, wherein the message component comprises a subject of the electronic message.

10. The method of any one of claims 1 to 9, wherein the message component comprises a signature line in a message body of the electronic message.

11. The method of any one of claims 1 to 10, wherein the message component comprises a main body of a message body of the electronic message.

12. A method for assisted message generation on an electronic device, comprising:
receiving an electronic message;
parsing the electronic message to determine whether one or more predetermined calendar keys are present in the received electronic message; and
when one or more predetermined calendar keys are present in the received electronic message:
obtaining availability information from a calendar application associated with the electronic device;
determining a suggested message component in dependence on the identified message recipient and the availability information; and
displaying the suggested message components on a display screen of the electronic device.

13. A method for assisted message generation on an electronic device, comprising:
receiving an electronic message;
parsing the electronic message to determine whether one or more predetermined location keys are present in the received electronic message; and
when one or more predetermined location keys are present in the electronic message:
obtaining location information associated with the electronic message from a location detection subsystem of the electronic message;
determining the suggested message component in dependence on the identified message recipient and the location information; and
displaying the suggested message components on a display screen of the electronic device.

14. A method for assisted message generation on an electronic device, comprising:
receiving an electronic message;
parsing the received electronic message to determine whether one or more predetermined source keys are present in the received electronic message, the predetermined sources keys being associated with the content of message components in the datastore;
determining the suggested message component in dependence on the identified message recipient and any predetermined source keys present in the received electronic message; and
displaying the suggested message components on a display screen of the electronic device.

15. An electronic device, comprising:
a processor:
a display connected to the processor;
a communication subsystem connected to the controller configured for communication over a wireless network;
a memory connected to the processor and having one or more datastores stored thereon; and
an input device connected to the processor;
wherein the processor is configured for performing the method of any one of claims 1 to 14.

## Amended claims

### Amended claims in accordance with Rule 137(2) EPC.

**1.** A method for assisted message generation on an electronic device, comprising:
receiving (402) from an input device a request to compose an electronic message;
displaying (404) electronic message composition user interface screen on a display screen of the electronic device;
identifying (406) a message recipient associated with the electronic message;
determining (408) one or more suggested message components, each of the suggested message components being one of a subject of the electronic message, an address line in a message body of the electronic message, a main body of the message body of the electronic message or a signature line in the message body of the electronic message, the suggested message components being determined from a datastore in dependence on the identified message recipient, the datastore comprising a plurality of message components;
displaying (410) the suggested message components on the display screen of the electronic device;
determining (412), for each suggested message component, whether the suggested message component is accepted;
when the suggested message components are rejected, providing (416) the electronic message composition user interface screen for input from the input device;
when one or more of the suggested message components are accepted, automatically populating (414), for each suggested message component which is accepted, a message component field of the electronic message composition user interface screen in accordance with the suggested message component, and providing the electronic message composition user interface screen for input from the input device.

**2.** The method of claim 1, wherein the suggested message components are determined in dependence on the identified message recipient and a historical usage of message components in the datastore.

**3.** The method of claim 2, wherein the suggested message components are determined in dependence on the identified message recipient and a last used message component in the datastore.

**4.** The method of claim 2, wherein the suggested message components are determined in dependence on the identified message recipient and a most frequently used message component in the datastore.

**5.** The method of any one of claims 1 to 4, wherein determining the suggested message component comprises:
determining, from a first datastore, a contact type associated with the identified message recipient; and
determining, from a second datastore, the suggested message components for the electronic message in dependence on the contact type.

**6.** The method of claim 5, wherein determining the contact type comprises determining whether the identified message recipient is a business contact or a personal contact.

**7.** The method of any one of claims 1 to 6, wherein the request to compose the electronic message is a request to reply to a received electronic message, wherein determining the suggested message components comprises:
parsing the received electronic message to determine whether one or more predetermined source keys are present in the received electronic message, the predetermined sources keys being associated with the content of message components in the datastore; and
determining the suggested message components in dependence on the identified message recipient and any predetermined source keys present in the received electronic message.

**8.** The method of any one of claims 1 to 7, wherein the request to compose the electronic message is a request to reply to a received electronic message, wherein determining the suggested message components comprises:
parsing the electronic message to determine whether one or more predetermined calendar keys are present in the received electronic message; and
when one or more predetermined calendar keys are present in the received electronic message:
obtaining availability information from a calendar application associated with the electronic device; and
determining the suggested message components in dependence on the identified message recipient and the availability information.

**9.** The method of any one of claims 1 to 8, wherein the request to compose the electronic message is a request to reply to a received electronic message, wherein determining the suggested message components comprises:
parsing the electronic message to determine whether one or more predetermined location keys are present in the received electronic message; and
when one or more predetermined location keys are present in the electronic message:
obtaining location information associated with the electronic message from a location detection subsystem of the electronic message; and
determining the suggested message components in dependence on the identified message recipient and the location information.

**10.** The method of claim 9, further comprising:
populating a location field in the suggested message components with the location information.

**11.** The method of any one of claims 1 to 10, further comprising;
receiving from the input device a request to send the electronic message; sending the electronic message to the identified message recipient; and updating the datastore with one or more message components from the sent electronic message.

**12.** An electronic device (201), comprising:
a processor (240):
a display (204) connected to the processor (240);
a communication subsystem connected to the controller configured for communication over a wireless network;
a memory (244, 246, 248) connected to the processor (240) and having one or more datastores stored thereon; and
an input device connected to the processor;
wherein the processor (240) is configured for performing the method of any one of claims 1 to 11.
